(19) Europäisches Patentamt
European Patent Office
Office européen des brevets

(11) **EP 4 160 005 B1**

(12) **EUROPÄISCHE PATENTSCHRIFT**

(45) Veröffentlichungstag und Bekanntmachung des Hinweises auf die Patenterteilung:
**12.11.2025   Patentblatt 2025/46**

(21) Anmeldenummer: **21200580.5**

(22) Anmeldetag: **01.10.2021**

(51) Internationale Patentklassifikation (IPC):
**F03D 7/02** *(2006.01)*      **F03D 17/00** *(2016.01)*

(52) Gemeinsame Patentklassifikation (CPC):
**F03D 7/0298; F03D 17/017;** F05B 2270/334;
Y02E 10/72

(54) **VERFAHREN ZUM BETREIBEN EINER WINDENERGIEANLAGE**

METHOD FOR OPERATING A WIND TURBINE

PROCÉDÉ DE FONCTIONNEMENT D'UNE ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**05.04.2023   Patentblatt 2023/14**

(73) Patentinhaber: **Wobben Properties GmbH**
**26607 Aurich (DE)**

(72) Erfinder: **Bunge, Frank**
**67063 Ludwigshafen (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
**US-A1- 2015 204 208      US-A1- 2021 095 640**

## Beschreibung

Die vorliegende Erfindung betrifft ein Verfahren zum Betreiben einer Windenergieanlage und eine Windenergieanlage.

Windenergieanlagen sind allgemein bekannt und üblicherweise als Horizontalläufer ausgeführt, d.h. dass die einem Wind entnommene, kinetische Energie in eine mechanische Drehbewegung um eine, im Wesentlichen horizontale Drehachse gewandelt wird, die auf einem Turm einer Windenergieanlage angeordnet ist. Diese Drehachse wird auch als Hauptdrehachse der Windenergieanlage bezeichnet.

Der Turm solcher Horizontalläufer wird dabei insbesondere unter Berücksichtigung der Nenndrehzahl des aerodynamischen Rotors der Windenergieanlage und unter Berücksichtigung der 1. Eigenfrequenz des Turmes ausgelegt, bspw. mittels des sogenannten Campbell-Diagramms, wonach Türme von Windenergieanlagen entsprechend als steif, weich oder doppeltweich bezeichnet werden.

Bei einem steifen Turm (engl.: stiff-stiff) liegt die 1. Eigenfrequenz, also die unterste Resonanzfrequenz, des Turmes im Bereich der Nenndrehzahl der Windenergieanlage oberhalb der dreifachen Nenndrehzahl (3p).

Bei einem weichen Turm (engl.: soft-stift) liegt die 1. Eigenfrequenz, also die unterste Resonanzfrequenz, des Turmes im Bereich der Nenndrehzahl der Windenergieanlage unterhalb der dreifachen Nenndrehzahl (3p) und oberhalb der einfachen Nenndrehzahl (1p).

Bei einem doppeltweichen Turm (engl.: soft-soft) liegt die 1. Eigenfrequenz, also die unterste Resonanzfrequenz, des Turmes im Bereich der Nenndrehzahl der Windenergieanlage unterhalb der einfachen Nenndrehzahl (1p).

Trotz aller Sorgfalt und trotz der Berücksichtigung der 1. Eigenfrequenz, kann es bei der Auslegung des Turmes zu aufklingenden Turmschwingungen kommen, die durch den Wind angeregt werden und im Resonanzbereich der Windenergieanlage liegen und so zu großen Lasten innerhalb des Turmes führen, weswegen die Windenergieanlage bspw. gedrosselt oder gar abgeschaltet werden muss.

Insbesondere im Bereich der doppelt-weichen Türme konnten aufklingende Schwingungen im Bereich der 2. Turmeigenfrequenz beobachtet werden.

US 2021/0095640 A1 und US 2015/0204208 A1 beschreiben jeweils unterschiedliche Vorrichtungen zur Erfassung von Schwingungen an Windenergieanlagen.

Aufgabe der vorliegenden Erfindung ist es daher, wenigstens eines der obengenannten Probleme zu adressieren, insbesondere soll ein Verfahren zum Steuern einer Windenergieanlage bereitgestellt werden, welches Turm(eigen-)schwingungen, insbesondere im Bereich der 2. Turmeigenfrequenz, berücksichtigt.

Erfindungsgemäß wird somit ein Verfahren zum Betreiben einer Windenergieanlage gemäß Anspruch 1 vorgeschlagen, umfassend die Schritte: Erfassen wenigstens einer Winkelgeschwindigkeit der Windenergieanlage durch einen Drehratensensor in einer Nabe der Windenergieanlage, Erfassen eines Referenzwertes für die wenigstens eine erfasste Winkelgeschwindigkeit; Bestimmen wenigstens einer Zustandsgröße der Windenergieanlage aus der wenigstens einen Winkelgeschwindigkeit und dem Referenzwert; Steuern der Windenergieanlage in Abhängigkeit der Zustandsgröße, insbesondere so, dass die Zustandsgröße kleiner wird.

Es wird also insbesondere vorgeschlagen, beim Betreiben einer Windenergieanlage die Turmschwingungen, insbesondere die Turmeigenschwingungen, bevorzugt die Turmeigenschwingungen eines doppeltweichen Turmes im Bereich der 2. Turmeigenfrequenz, zu berücksichtigen.

Die Turmschwingungen bzw. die Turmeigenschwingungen werden dabei, insbesondere indirekt, mittels eines Drehratensensors erfasst, bspw. mittels eines Gyroskops in der Nabe der Windenergieanlage.

In einem ersten Schritt wird hierfür wenigstens eine Winkelgeschwindigkeit der Windenergieanlage erfasst, insbesondere eine Winkelgeschwindigkeit der Gondel um eine Achse, die im Wesentlichen parallel zur Hauptdrehachse der Windenergieanlage bzw. parallel zur Drehachse des Rotors der Windenergieanlage verläuft.

Die Winkelgeschwindigkeit wird durch einen Drehratensensor, bevorzugt ein Gyroskop, erfasst.

Erfindungsgemäß ist Drehratensensor in der Nabe der Windenergieanlage angeordnet. In einem weiteren Schritt wird zudem ein Referenzwert für diese so erfasste Winkelgeschwindigkeit erfasst.

Der Referenzwert ist ein Referenzwinkel, nämlich eine Rotorposition, nämlich der Winkel einer Verdrehung des Rotors um eine Rotorachse relativ zur Gondel.

Aus der so erfassten Winkelgeschwindigkeit und dem so erfassten Referenzwert wird dann eine Zustandsgröße der Windenergieanlage ermittelt.

Die Zustandsgröße ist eine Vorwärts-Rückwärts-Bewegung der Gondel entlang der Hauptdrehachse, bevorzugt eine Geschwindigkeit der Gondel, insbesondere Rotationsgeschwindigkeit entlang der Hauptdrehachse des Rotors.

Die Geschwindigkeit der Gondel entlang der Hauptdrehachse der Windenergieanlage, also um eine Orthogonale der Hauptdrehachse, welche in der Ebene der Hauptdrehachse liegt, wird auch als frontale Verkippgeschwindigkeit oder Nickgeschwindigkeit bzw. Nickrate der Gondel bezeichnet.

Die Geschwindigkeit der Gondel um die Hauptdrehachse der Windenergieanlage wird auch als seitliche Verkippgeschwindigkeit oder Rollgeschwindigkeit bzw. Rollrate der Gondel bezeichnet.

Bevorzugt wird die Zustandsgröße ferner aufbereitet, insbesondere gefiltert. Bspw. wird die Amplitude der Verkippgeschwindigkeit der Gondel in bestimmten Bereichen gefiltert, um die 2. Turmeigenmode des Turmes der Windenergieanlage zu ermitteln.

Unter Eigenmode wird hierin insbesondere jene Schwingung eines Systems verstanden, wenn es sich selbst überlassen ist. Die Frequenz einer Eigenmode wird ferner als Eigenfrequenz bezeichnet.

Die Windenergieanlage wird anschließend in Abhängigkeit dieser so bestimmten Zustandsgröße gesteuert, insbesondere so, dass die Zustandsgröße kleiner wird, bevorzugt dem Betrage nach kleiner wird.

Sofern also bspw. eine Zunahme einer Turm(eigen-)schwingung erkannt wird, wird die Windenergieanlage derart gesteuert, dass die Turm(eigen-)schwingung, bspw. die 2. Turmeigenmode, abnimmt.

Das Steuern der Windenergieanlage erfolgt dann bspw. durch wenigstens eines der nachfolgende Liste bestehend aus: Verändern einer Drehzahl der Windenergieanlage, Verändern einer Rotordrehzahl der Windenergieanlage, Verändern eines Generatormomentes der Windenergieanlage, Verändern eines Pitchwinkels eines Rotorblattes der Windenergieanlage, Verändern aller Pitchwinkel aller Rotorblätter der Windenergieanlage, insbesondere um denselben Winkel, Verändern eines Azimutwinkels der Windenergieanlage, insbesondere der Gondel.

Gemäß einer weiteren Ausführungsform kann auch eine, zu der Windenergieanlage benachbarte Windenergieanlage gesteuert werden, um die Turm(eigen-)schwingung, bspw. die 2. Turmeigenmode, der Windenergieanlage zu reduzieren. Hierfür wird bspw. bei der benachbarten Windenergieanlage die Drehzahl, die Rotordrehzahl, das Generatormomentes, ein Pitchwinkel eines Rotorblattes oder der Azimutwinkel geändert, insbesondere so, dass durch die benachbarte Windenergieanlage erzeugte Turbulenzen reduziert werden, die zu einer Turm(eigen-)schwingung der Windenergieanlage führen.

Sollte die Turm(eigen-)schwingung trotz dieser Maßnahmen weiterhin zunehmen, bspw. durch ungünstige Windverhältnisse, so wird auch vorgeschlagen, die Windenergieanlage zu stoppen bzw. abzuschalten oder abzufahren und/oder den Arbeitspunkt der Windenergieanlage zu verschieben, bspw. durch Verändern der Drehzahl der Windenergieanlage.

Bevorzugt erfolgt das Stoppen und/oder das Verschieben des Arbeitspunktes der Windenergieanlage unter Berücksichtigung eines Grenzwertes.

Bevorzugt ist der Grenzwert ein Wert für eine Ermüdungslast, bspw. des Turmes.

Der Grenzwert beschreibt also bevorzugt eine Grenze für eine zu starke Schwingung, insbesondere des Turmes, über einen, insbesondere zu langen, Zeitraum.

Vorzugsweise werden drei, insbesondere absolute, Winkelgeschwindigkeiten in jeweils eine Richtung erfasst, wobei eine Richtung entlang einer Drehachse eines Rotors der Windenergieanlage verläuft und die anderen Richtungen jeweils senkrecht darauf und senkrecht zueinander darauf stehen.

Es wird also insbesondere vorgeschlagen drei, bevorzugt genau drei, Winkelgeschwindigkeiten, die insbesondere in ihrer Richtung verschieden voneinander sind, zu erfassen.

Eine erste Winkelgeschwindigkeit um die Drehachse des Rotors der Windenergieanlage.

Eine zweite Winkelgeschwindigkeit senkrecht zu der ersten Winkelgeschwindigkeit.

Eine dritte Winkelgeschwindigkeit senkrecht zur ersten Winkelgeschwindigkeit und senkrecht zur zweiten Winkelgeschwindigkeit.

Bevorzugt sind die Winkelgeschwindigkeit orthogonal zu einander.

Vorzugsweise gibt die Zustandsgröße eine Verkippgeschwindigkeit der Gondel der Windenergieanlage wieder.

Bevorzugt gibt die Zustandsgröße die Verkippgeschwindigkeit der Gondel der Windenergieanlage um eine Achse wieder, die senkrecht auf der Hauptdrehachse steht und mit dieser in einer horizontalen Ebene liegt.

Vorzugsweise wird die Zustandsgröße wenigstens unter Verwendung einer Näherung bestimmt, die insbesondere eine Verdrehung einer Messachse gegenüber der Drehachse und/oder einer horizontalen der Windenergieanlage berücksichtigt, bspw. mittels

$$\begin{pmatrix} \omega_{Nac,tilt,x} \\ \omega_{Nac,tilt,y} \\ \omega_{Nac,tilt,z} \end{pmatrix} = \begin{pmatrix} 1 & 0 & 0 \\ 0 & \cos(-\gamma) & -\sin(-\gamma) \\ 0 & \sin(-\gamma) & \cos(-\gamma) \end{pmatrix} \begin{pmatrix} \omega_{Gyro,x} \\ \omega_{Gyro,y} \\ \omega_{Gyro,z} \end{pmatrix}.$$

Durch die Verwendung eines Drehratensensors, der in der Nabe der Windenergieanlage angeordnet ist, kann die Messachse dieses Drehratensensors zur Drehachse des Rotors der Windenergieanlage verdreht bzw. verkippt, bspw. um einen Winkel.

Hierfür wird dann vorgeschlagen, diese Verdrehung bzw. Verkippung mittels einer Näherung heraus zu rechnen.

In einer anderen Ausführungsform kann die Achse des Drehratensensors aber auch in oder parallel zur Drehachse der Windenergieanlage liegen.

Zusätzlich oder alternativ kann die Drehachse der Windenergieanlage auch um einen Winkel zur horizontalen Achse der Windenergieanlage verkippt sein, dem sogenannten Tiltwinkel. Dies kann dann bspw. entsprechend der obigen Gleichung berücksichtigt werden. Bevorzugt beschreibt der Tiltwinkel eine Verkippung der Drehachse des Rotors der Windenergieanlage zu einer horizontalen Ebene bzw. der horizontalen Ebene der Windenergieanlage.

Vorzugsweise wird die wenigstens eine Winkelgeschwindigkeit vor dem Bestimmen der Zustandsgröße gefiltert, insbesondere mittels eines Bandpasses, bevorzugt um eine 2. Turmeigenmode zu erhalten.

Es wird also insbesondere vorgeschlagen, die erfassten (Mess-)Größen zu filtern, insbesondere so, dass Rückschlüsse auf die 2. Turmeigenmode möglich sind.

Vorzugsweise erfolgt das Steuern der Windenergieanlage unter Berücksichtigung, insbesondere Beobachtung, der Zustandsgröße.

Es wird also insbesondere auch vorgeschlagen, die Zustandsgröße beim Steuern zu berücksichtigen, insbesondere zu beobachten.

Das Steuern erfolgt dabei insbesondere so, dass die Zustandsgröße kleiner wird, bevorzugt dem Betrage nach kleiner wird.

Vorzugsweise wird die Zustandsgröße zum Steuern der Windenergieanlage gefiltert, bspw. mittels eines Tiefpasses.

Vorzugsweise wird die, insbesondere absolute, Winkelgeschwindigkeit in eine Richtung erfasst, wobei die Richtung entlang einer Drehachse eines Rotors der Windenergieanlage, insbesondere entlang der Hauptdrehachse, verläuft.

Es wird also insbesondere eine, bevorzugt genau eine, Winkelgeschwindigkeit erfasst.

Die Winkelgeschwindigkeit wird dabei insbesondere in Richtung der Hauptdrehachse der Windenergieanlage erfasst, also um eine Achse, die senkrecht auf der Hauptdrehachse steht und mit dieser in einer horizontalen Ebene liegt.

Wie bereits erwähnt, kann die Zustandsgröße eine Verkippgeschwindigkeit der Gondel der Windenergieanlage wiedergeben.

Erfindungsgemäß wird ferne eine Windenergieanlage vorgeschlagen, wenigstens umfas- send einen Sensor, bspw. einen Drehratensensor und/oder einen Magnetbandsensor, und eine Steuereinheit, die dazu eingerichtet ist, ein vorstehend oder nachstehend beschriebenes Verfahren auszuführen.

Der Drehratensensor ist bevorzugt als Gyroskop ausgeführt.

Der Magnetbandsensor ist bevorzugt auf der Welle der Hauptdrehachse angeordnet.

Es wird ferner ein Verfahren zum Erfassen einer 2. Eigenmode eines Turmes einer Windenergieanlage vor- geschlagen, umfassend die Schritte: Erfassen wenigstens einer Drehrate der Windenergieanlage; Ermitteln der Verkippgeschwindigkeit der Gondel aus der erfassten Drehrate; Filtern der Verkippgeschwindigkeit der Gondel, um die 2. Eigenmode des Turmes der Windenergieanlage zu ermitteln; und Steuern der Windenergieanlage in Abhängigkeit der 2. Eigenmode des Turmes der Windenergieanlage, insbesondere so, dass die Frequenz der 2. Eigenmode abnimmt.

Die zweite Turmeigenmode führt zu einer Durchbiegung des Turmes auf ca. 2/3 der Turmhöhe, und zu einem entsprechenden frontalen oder seitlichen Kippen der Gondel. In Abhängigkeit davon wird die Windenergieanlage gesteuert.

Die Durchbiegung führt zu entsprechenden Lasten, welche die Lebenszeit des Turmes reduzieren.

Vorzugsweise wird zudem wenigstens eine relative Winkelgeschwindigkeit zwischen Gondel und Nabe erfasst.

Die vorliegende Erfindung wird nachfolgend und anhand der begleitenden Figuren näher erläutert, wobei für gleiche oder ähnliche Bauteile oder Baugruppen dieselben Bezugszeichen verwendet werden.

Fig. 1A    zeigt schematisch und exemplarisch eine perspektivische Ansicht einer Windenergieanlage in einer Ausführungsform.

Fig. 1B    zeigt schematisch und exemplarisch die Achsen einer Windenergieanlage.

Fig. 2    zeigt schematisch und exemplarisch ein Campbell-Diagramm für einen Turm einer Windenergieanlage.

Fig. 3A    zeigt schematisch und exemplarisch eine Schwingung einer Windenergieanlage, insbesondere ein Nicken einer Gondel.

Fig. 3B    zeigt schematisch und exemplarisch eine Schwingung einer Windenergieanlage, insbesondere ein Rollen einer Gondel.

Fig. 4A    zeigt schematisch und exemplarisch ein Verfahren zum Betreiben einer Windenergieanlage gemäß einer Ausführungsform, insbesondere für ein Nicken einer Gondel.

Fig. 4B    zeigt schematisch und exemplarisch ein Verfahren zum Betreiben einer Windenergieanlage gemäß einer Ausführungsform, insbesondere für ein Rollen einer Gondel.

Fig. 5     zeigt schematisch und exemplarisch eine Möglichkeit eine Verkippgeschwindigkeit für eine zweite Turmeigenmode zu bestimmen.

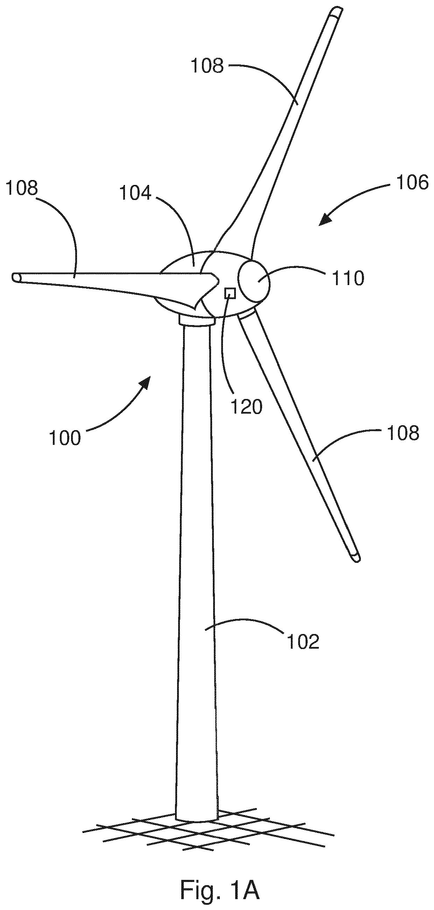

Fig. 1A zeigt eine perspektivische Ansicht einer Windenergieanlage 100.

Die Windenergieanlage 100 ist als Horizontalläufer ausgeführt und weist einen Turm 102 und eine Gondel 104 auf.

An der Gondel 104 ist ein aerodynamischer Rotor 106 mit drei Rotorblättern 108 an einer Nabe 110 angeordnet.

Der aerodynamische Rotor 106 wird im Betrieb durch den Wind in eine Drehbewegung um eine, im Wesentlichen horizontal auf dem Turm gelagerten Drehachse versetzt und treibt dadurch einen Generator in der Gondel an.

Der Generator erzeugt hierdurch einen einzuspeisenden Strom, der mittels einer Umrichteranordnung in ein elektrisches Versorgungnetz eingespeist wird.

In dem Rotor 106 ist ferner ein Drehratensensor 120 angeordnet, nämlich in der Nabe 110 und um ein vorstehend oder nachstehend beschriebenes Verfahren auszuführen.

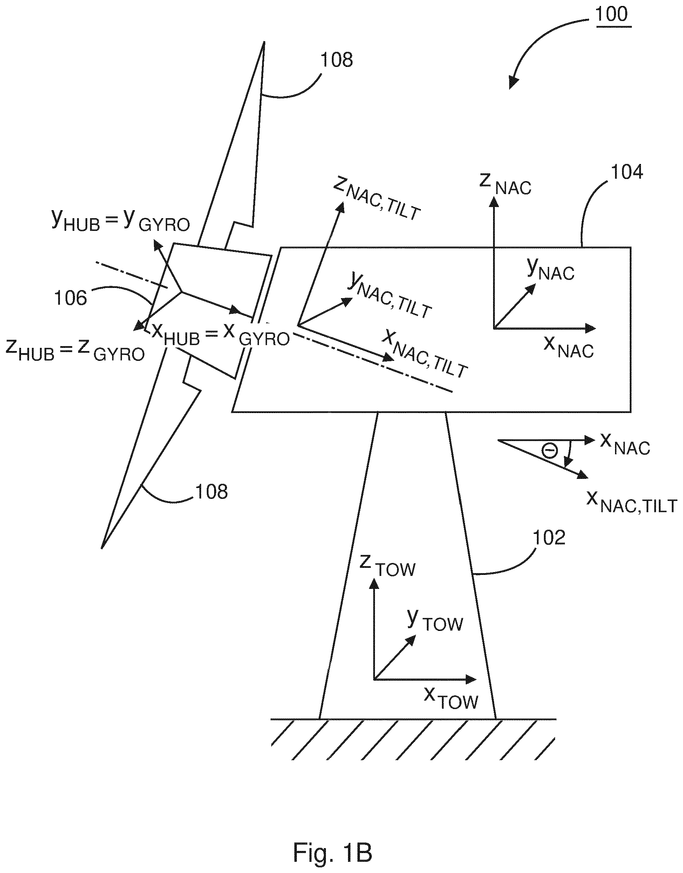

Fig. 1B zeigt schematisch und exemplarisch die Achsen einer Windenergieanlage 100. Die Windenergieanlage 100 umfasst einen Turm 102, eine Gondel 104, einen Rotor 106 und Rotorblätter 108.

Die Ausrichtung des Turmes 102 kann mittels der Achsen $x_{TOW}$, $y_{TOW}$, $z_{TOW}$ beschrieben werden.

Die Ausrichtung der Gondel 104 kann mittels der Achsen $x_{NAC}$, $y_{NAC}$, $z_{NAC}$ beschrieben werden.

Die Gondel 104 ist zudem bevorzugt senkrecht auf dem Turm 102 angeordnet. Dies führst insbesondere dazu, dass die Achsen $x_{TOW}$, $y_{TOW}$, $z_{TOW}$ des Turmes 102 und die Achsen $x_{NAC}$, $y_{NAC}$, $z_{NAC}$ der Gondel parallel zu einander verlaufen.

Der aerodynamische Rotor 106 ist ferner um einen Winkel $\Theta$, dem sogenannten Tiltwinkel, gekippt an der Gondel 104 angeordnet und insbesondere um eine Achse, insbesondere $y_{Nac}$ verkippt.

Der aerodynamische Rotor 106 kann mittels der Achsen $x_{ROT}$, $y_{ROT}$, $z_{ROT}$ beschrieben werden.

Da der Drehratensensor, insbesondere das Gyropskop, in der Nabe, also innerhalb des aerodynamischen Rotors 106 angeordnet ist, fallen die Achsen $x_{GYRO}$, $y_{GYRO}$, $z_{GYRO}$ des Drehratensensors und der aerodynamischen Rotors 106 zusammen.

Da der Rotor 106 gekippt an der Gondel angeordnet ist, ist auch der Drehratensensor gekippt zur Gondel und somit auch gekippt zur Hauptdrehachse $z_{NAC}$ der Windenergieanlage angeordnet, insbesondere um den Winkel $\Theta$.

Zudem ist der Rotor 106 um einen Winkel $\gamma$, bevorzugt einen zeitlich veränderlichen Winkel $\gamma(t)$, entlang einer Achse $x_{Nac,tilt}$ gegenüber der Gondel verdreht.

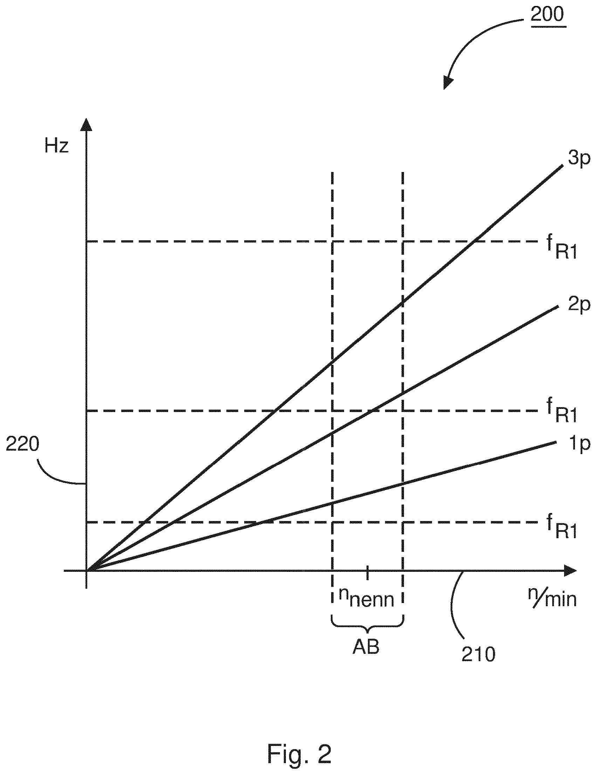

Fig. 2 zeigt schematisch und exemplarisch ein Campbell-Diagramm 200 für einen Turm einer Windenergieanlage.

Das Campbell-Diagramm 200 ist als kartesisches Koordinatensystem ausgebildet, wobei auf der Abszisse 210 die Drehzahl des Rotors der Windenergieanlage in Umdrehungen pro Minute und auf der Ordinate 220 die Eigenfrequenz der Windenergieanlage, insbesondere des Turmes, in Hertz abgetragen ist.

Windenergieanlagen sind üblicherweise für einen bestimmten Arbeitsbereich AB konstruiert und ausgelegt, bspw. für eine bestimmte Nenndrehzahl $n_{nenn}$. Die Nenndrehzahl $n_{nenn}$ beträgt bspw. 12 Umdrehungen pro Minute. Um in den Arbeitsbereich AB zu gelangen, muss die Windenergieanlage bspw. an- oder abgefahren werden.

Zudem weist der Turm der Windenergieanlage wenigstens eine 1. Eigenfrequenz $f_{R1}$ auf.

Bei einem steifen Turm (engl.: stift-stift) liegt die 1. Eigenfrequenz $f_{R1}$, also die unterste Resonanzfrequenz, des Turmes im Arbeitsbereich AB oberhalb der dreifachen Nenndrehzahl (3p).

Bei einem weichen Turm (engl.: soft-stift) liegt die 1. Eigenfrequenz $f_{R1}$, also die unterste Resonanzfrequenz, des Turmes im Arbeitsbereich AB unterhalb der dreifachen Nenndrehzahl (3p) und oberhalb der einfachen Nenndrehzahl (1p).

Bei einem doppeltweichen Turm (engl.: soft-soft) liegt die 1. Eigenfrequenz $f_{R1}$, also die unterste Resonanzfrequenz, des Turmes im Arbeitsbereich unterhalb der einfachen Nenndrehzahl (1p).

Bevorzugt wird das hierin beschriebene Verfahren bei Windenergieanlagen mit einem doppeltweichen Turm (engl.: soft-soft) verwendet.

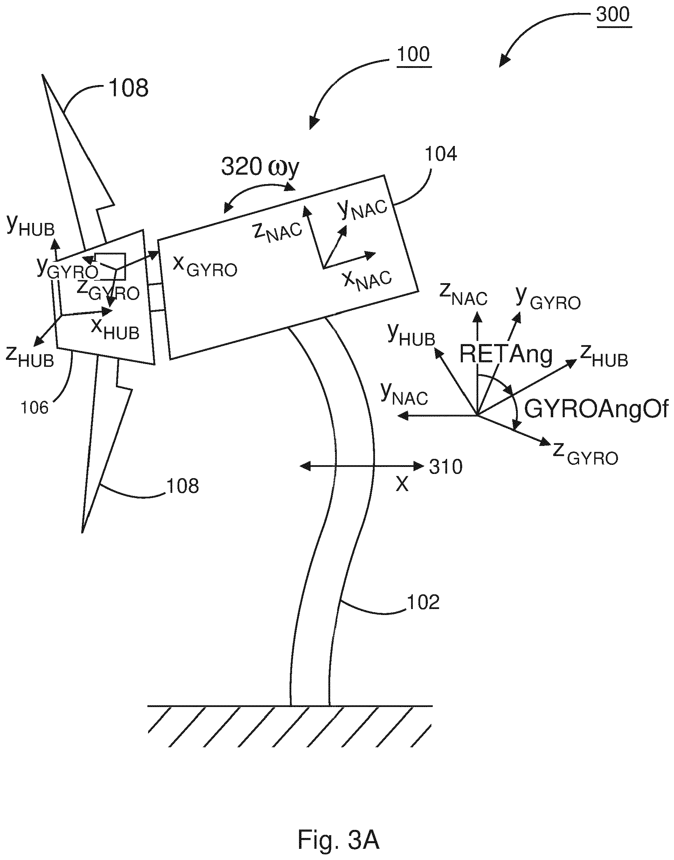

Fig. 3A zeigt schematisch und exemplarisch eine Schwingung 300 einer Windenergieanlage, wie in den Figuren 1A und 1B gezeigt.

Die Schwingung 300 besteht im Wesentlichen aus einer oszillierenden Auslenkung des Turmes 310 in x-Richtung, also entlang der Hauptachse der Windenergieanlage, und einer damit verbundenen Vorwärts-Rückwärts-Bewegung 320 der Gondel entlang der Hauptdrehachse bzw. um die y-Achse, das sogenannte Nicken der Gondel.

Ursächlich für diese Schwingung 300 ist die 2. Turmeigenmode.

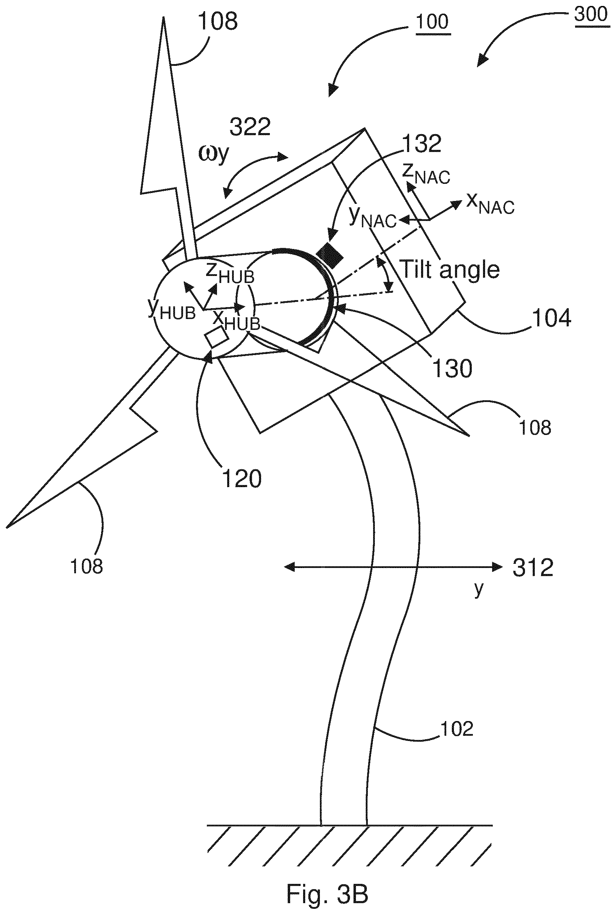

Fig. 3B zeigt schematisch und exemplarisch eine Schwingung 300 einer Windenergieanlage, wie in den Figuren 1A und 1B gezeigt.

Die Schwingung 300 besteht im Wesentlichen aus einer oszillierenden Auslenkung 310 des Turmes 310 in y-Richtung, also um die Hauptachse der Windenergieanlage 100, und einer damit verbundenen Seitwärts-Bewegung 320 der Gondel um die Hauptdrehachse bzw. entlang der y-Achse, das sogenannte Rollen der Gondel.

Ursächlich für diese Schwingung 300 ist die 2. Turmeigenmode des Turmes 102 der Windenergieanlage 100.

Um diese Schwingung 300 zu erfassen, ist wenigstens ein Magnetbandsensor 130 an der Hauptachse, bspw. der Welle des Rotors, sowie ein Lesekopf 132 für das Magnetsensorband 130 in der Gondel 104 angeordnet.

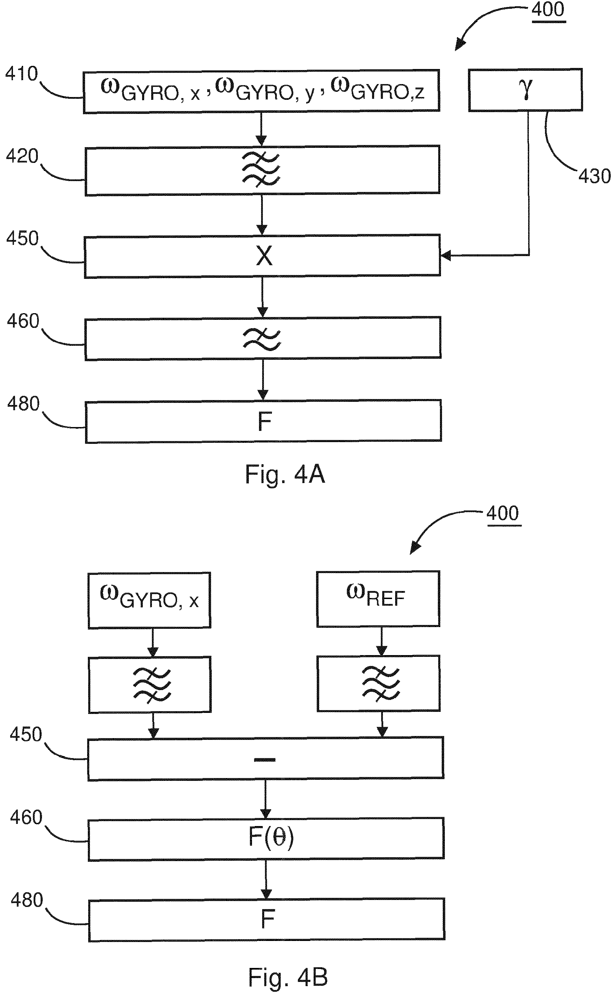

Fig. 4A zeigt schematisch und exemplarisch ein Verfahren 400 zum Betreiben einer Windenergieanlage gemäß einer Ausführungsform, insbesondere für ein Nicken einer Gondel.

In einem ersten Schritt 410 werden die Winkelgeschwindigkeiten $\omega_{GYRO, x}$, $\omega_{GYRO, y}$, $\omega_{GYRO,z}$ der Windenergie-anlage 100 erfasst, insbesondere die Winkelgeschwindigkeiten $\omega_{GYRO, x}$, $\omega_{GYRO, y}$, $\omega_{GYRO, z}$ der Gondel, mit einem Drehratensensor in der Nabe der Windenergieanlage.

Bevorzugt werden in einem nächsten Schritt 420 die so erfassten Winkelgeschwindigkeiten $\omega_{GYRO, x}$, $\omega_{GYRO, y}$, $\omega_{GYRO,z}$ gefiltert, insbesondere auf Frequenzen, die durch die 2. Turmeigenmoden verursacht werden. Das Filtern erfolgt dabei bevorzugt mittels eines Bandpassfilters.

Zudem wird in einem weiteren Schritt 430 ein Referenzwert $\gamma$ für die Winkelgeschwindigkeiten $\omega_{GYRO, x}$, $\omega_{GYRO, y}$, $\omega_{GYRO, z}$ erfasst, nämlich die Rotorposition in Form eines relativen Drehwinkels, nämlich der Nabe relativ zur Gondel. In einem weiteren Schritt 450 wird eine Zustandsgröße bestimmt, bspw. die Verkippgeschwindigkeit $\omega_{Nac.y}$ der Gondel um die y-Achse bestimmt, dem sogenannten Nicken.

Bevorzugt wird die Zustandsgröße in einem weiteren Schritt 460 ebenfalls gefiltert, bspw. mit einem Tiefpassfilter.

Abschließend wird die Windenergieanlage in einem weiteren Schritt 480 in Abhängigkeit der Zustandsgröße gesteuert, bspw. mittels Steuersignalen F.

Fig. 4B zeigt schematisch und exemplarisch ein Verfahren 400 zum Betreiben einer Windenergieanlage gemäß einer Ausführungsform, insbesondere für ein Rollen einer Gondel.

In einem ersten Schritt 410 wird die Winkelgeschwindigkeit $\omega_{GYRO,x}$ der Windenergieanlage 100 erfasst, insbesondere die Winkelgeschwindigkeit $\omega_{GYRO,x}$ der Gondel um die Hauptachse (x), bspw. mit einem Drehratensensor in der Nabe der Windenergieanlage. Bevorzugt wird in einem nächsten Schritt 420 die so erfasste Winkelgeschwindigkeit $\omega_{GYRO,x}$ gefiltert, insbesondere auf Frequenzen, die durch die 2. Turmeigenmoden verursacht werden. Das Filtern erfolgt bevorzugt mittels eines Bandpassfilters.

Zudem wird in einem weiteren Schritt 430 ein Referenzwert $\omega_{REF}$ für die Winkelgeschwindigkeit $\omega_{GYRO,x}$ erfasst, insbesondere die relative Rotationsgeschwindigkeit des Rotors der Windenergieanlage, bspw. mittels eines Magnetbandsensors 130.

Bevorzugt wird in einem nächsten Schritt 440 der so erfasste Referenzwert $\omega_{REF}$ ebenfalls mittels eines Bandpassfilters gefiltert.

In einem weiteren Schritt 450 wird eine Zustandsgröße bestimmt, bspw. die Verkippgeschwindigkeit $\omega_{Nac.x}$ der Gondel um die x-Achse, dem sogenannten Rollen. Hierfür kann es bspw. notwendig sein, einen vorstehend oder nachstehend beschriebene Tiltwinkel $\Theta$ zu berücksichtigen, bspw., weil der Drehratensensor zur Hauptdrehachse um diesen Winkel $\Theta$ verkippt ist.

Abschließend wird die Windenergieanlage in einem weiteren Schritt 460 in Abhängigkeit der Zustandsgröße gesteuert, bspw. mittels Steuersignalen F.

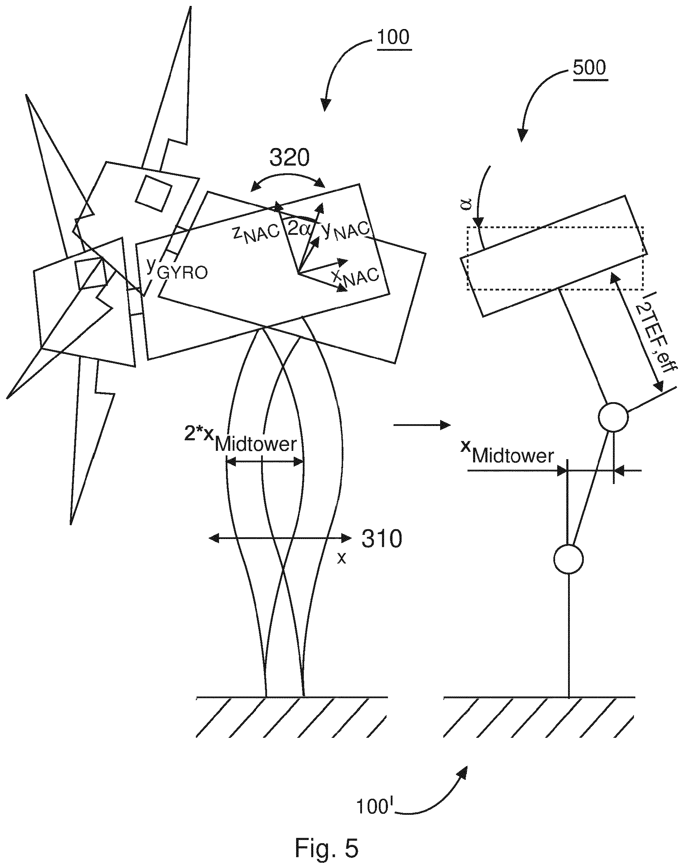

Fig. 5 zeigt schematisch und exemplarisch eine Möglichkeit eine Verkippgeschwindigkeit für eine zweite Turmeigenmode zu bestimmen, insbesondere mittels eines Models einer Windenergieanlage 500, bevorzugt niedriger Ordnung.

Die Windenergieanlage 100, bspw. wie in Fig. 1A oder 1B gezeigt, wird hierfür linearisiert. Dies erfolgt nachfolgend am Beispiel eines Nickens der Windenergieanlage, wie bspw. in Fig. 3 gezeigt.

Die Verkippung $\alpha$ der Gondel gegenüber dem Normalzustand beträgt

$$\sin \alpha = \frac{x_{Midtower}}{l_{2TEF,eff}},$$

wobei

$x_{Midtower}$ die Auslenkung des Turmes in der Mitte des Turmes ist und $l_{2TEF,eff}$ die effektive Länge des Turmes für die 2. Turmeigenmode.

Mit der Bewegungsgleichung

$$\omega_{Nac,max} = \frac{d\alpha}{dt}$$

ergibt sich daraus

$$\omega_{Nac,max} = 2\pi f_{2TEF} \frac{\hat{x}_{Midtower}}{l_{2TEF,eff}},$$

wobei

$\hat{x}_{Midtower}$ die maximale Auslenkung des Turmes beschreibt und $f_{2TEF}$ die Frequenz der 2. Turmeigenmode.
Die entsprechende Linearisierung 500' ist nebenstehend nur Windenergieanlage 100 abgebildet.

Bezugszeichenliste

| | |
|---|---|
| 100 | Windenergieanlage |
| 102 | Turm, insbesondere der Windenergieanlage |
| 104 | Gondel, insbesondere der Windenergieanlage |
| 106 | aerodynamischer Rotor, insbesondere der Windenergieanlage |
| 108 | Rotorblatt, insbesondere der Windenergieanlage |
| 110 | Spinner, insbesondere der Windenergieanlage |
| 120 | Drehratensensor, insbesondere Windenergieanlage |
| 130 | Magnetsensorband |
| 132 | Lesekopf, insbesondere für das Magnetsensorband |
| 200 | Campbell-Diagramm |
| 300 | Schwingen einer Windenergieanlage, insbesondere Nicken der Gondel |
| 310 | oszillierende Auslenkung des Turmes |
| 312 | oszillierende Auslenkung des Turmes |
| 320 | Vorwärts-Rückwärts-Bewegung der Gondel |
| 322 | Vorwärts-Rückwärts-Bewegung der Gondel |
| 400 | Verfahren zum Betreiben einer Windenergieanlage |
| 410, 420, | Verfahrensschritte |
| AB | (Drehzahl-)Arbeitsbereich, insbesondere der Windenergieanlage |
| F | Steuersignal |
| n | Drehzahl, insbesondere des Rotors der Windenergieanlage |
| $n_{nenn}$ | Nenndrehzahl, insbesondere des Rotors der Windenergieanlage |
| 1p | einfache Nenndrehzahl, insbesondere des Rotors der Windenergieanlage |
| 2p | doppelte Nenndrehzahl, insbesondere des Rotors der Windenergieanlage |
| 3p | dreifache Nenndrehzahl, insbesondere des Rotors der Windenergieanlage |
| | |
| $x_{HUB}$ | x-Achse desNabe |
| $x_{NAC}$ | x-Achse der Gondel |
| $x_{TOW}$ | x-Achse des Turmes |
| $y_{HUB}$ | y-Achse des Nabe |
| $y_{NAC}$ | y-Achse der Gondel |
| $y_{TOW}$ | y-Achse des Turmes |
| $z_{HUB}$ | z-Achse des Nabe |
| $z_{NAC}$ | z-Achse der Gondel |
| $z_{TOW}$ | z-Achse des Turmes |
| $\omega_{GYRO,x}$ | Winkelgeschwindigkeit des Drehratensensors, insbesondere um die x-Achse |
| $\omega_{GYRO,y}$ | Winkelgeschwindigkeit des Drehratensensors, insbesondere um die y-Achse |
| $\omega_{GYRO,z}$ | Winkelgeschwindigkeit des Drehratensensors, insbesondere um die z-Achse |
| $\omega_{REF}$ | Referenzwert, insbesondere Rotationsgeschwindigkeit des Rotors |
| | |
| $\alpha$ | Verkippung der Gondel |
| $x_{Midtower}$ | Auslenkung des Turmes, insbesondere in der Mitte des Turmes |
| $l_{2TEF,eff}$ | die effektive Länge des Turmes, insbesondere für die 2. Turmeigenmode |
| $\gamma$ | Referenzwert, insbesondere Rotorposition |
| $\Theta$ | Tiltwinkel |

**Patentansprüche**

1. Verfahren zum Betreiben einer Windenergieanlage (100), umfassend die Schritte:

   - Erfassen wenigstens einer Winkelgeschwindigkeit ($\omega_{gyro,y}$) der Windenergieanlage (100) durch einen Drehratensensor in einer Nabe der Windenergieanlagezum Erfassen einer Verkippung der Gondel;
   - Erfassen eines Referenzwertes ($\gamma$) für die wenigstens eine erfasste Winkelgeschwindigkeit, wobei der Referenzwert eine Rotorposition ($\gamma$) ist, nämlich der Winkel einer Verdrehung des Rotors um eine Rotorachse relativ zur Gondel;
   - Bestimmen wenigstens einer Zustandsgröße ($\omega_{Nac.y}$) der Windenergieanlage, nämlich einer Vorwärts-Rückwärts-Bewegung der Gondel entlang der Hauptdrehachse, aus der wenigstens einen Winkelgeschwindigkeit und dem Referenzwert;
   - Steuern der Windenergieanlage in Abhängigkeit der Zustandsgröße, insbesondere so, dass die Zustandsgröße kleiner wird.

2. Verfahren nach Anspruch 1, wobei

   - drei, insbesondere absolute, Winkelgeschwindigkeiten ($\omega_{gyro,x}$; $\omega_{gyro,y}$; $\omega_{gyro,z}$) in jeweils eine Richtung (x,y,z) erfasst werden, wobei eine Richtung (x) entlang einer Drehachse eines Rotors der Windenergieanlage (100) verläuft und die anderen Richtungen (y, z) jeweils senkrecht darauf und senkrecht zueinander stehen.

3. Verfahren nach wenigstens einem der vorstehenden Ansprüche, wobei

   - die Zustandsgröße ($\omega_{Nac.y}$) eine Verkippgeschwindigkeit ($\omega_{Nac.tilt,y}$) der Gondel der Windenergieanlage wiedergibt.

4. Verfahren nach wenigstens einem der vorstehenden Ansprüche, wobei

   - die Zustandsgröße ($\omega_{Nac.y}$) wenigstens unter Verwendung einer Näherung bestimmt wird, die insbesondere eine Verdrehung einer Messachse gegenüber der Drehachse und/oder einer horizontalen Achse der Wind-energieanlage berücksichtigt, bspw. mittels

$$\begin{pmatrix} \omega_{Nac,tilt,x} \\ \omega_{Nac,tilt,y} \\ \omega_{Nac,tilt,z} \end{pmatrix} = \begin{pmatrix} 1 & 0 & 0 \\ 0 & \cos(-\gamma) & -\sin(-\gamma) \\ 0 & \sin(-\gamma) & \cos(-\gamma) \end{pmatrix} \begin{pmatrix} \omega_{Gyro,x} \\ \omega_{Gyro,y} \\ \omega_{Gyro,z} \end{pmatrix}.$$

5. Verfahren nach wenigstens einem der vorstehenden Ansprüche, wobei

   - die wenigstens eine Winkelgeschwindigkeit ($\omega_{gyro,y}$) vor dem Bestimmen der Zustandsgröße gefiltert wird, insbesondere mittels eines Bandpasses, bevorzugt um eine 2. Turmeigenmode zu erhalten.

6. Verfahren nach wenigstens einem der vorstehenden Ansprüche, wobei

   - das Steuern der Windenergieanlage unter Berücksichtigung, insbesondere Beobachtung, der Zustandsgröße ($\omega_{Nnac.y}$) erfolgt.

7. Verfahren nach wenigstens einem der vorstehenden Ansprüche, wobei

   - die Zustandsgröße ($\omega_{Nac.y}$) zum Steuern der Windenergieanlage gefiltert wird, bspw. mittels eines Tiefpasses.

8. Windenergieanlage, wenigstens umfassend:

   - einen Sensor, bspw. einen Drehratensensor und/oder einen Magnetbandsensor,
   - und eine Steuereinheit, die dazu eingerichtet ist, ein Verfahren nach wenigstens einem der Ansprüche 1 bis 7 auszuführen.

**Claims**

1. A method for operating a wind power installation (100), comprising the steps of:

   - sensing at least one angular velocity ($\omega_{gyro,y}$) of the wind power installation (100) by use of a rotation rate sensor in a hub of the wind power installation for the purpose of sensing a tilt of the nacelle;
   - sensing a reference value ($\gamma$) for the at least one sensed angular velocity, wherein the reference value being a rotor position ($\gamma$), preferably the angle of a rotation of the rotor about a rotor axis relative to the nacelle;
   - determining at least one state variable ($\omega_{Nac.y}$) of the wind power installation, namely forward-backward motion of the nacelle along the main axis of rotation from the at least one angular velocity and the reference value;
   - controlling the wind power installation in dependence on the state variable, in particular such that the state variable becomes smaller.

2. The method as claimed in claim 1,

   - three, in particular absolute, angular velocities ($\omega_{gyro,x}$; $\omega_{gyro,y}$; $\omega_{gyro,z}$) being sensed in one direction (x,y,z) in each case, one direction (x) being along an axis of rotation of a rotor of the wind power installation (100), and the other directions (y, z) each being perpendicular thereto and perpendicular to each other.

3. The method as claimed at least in any one of the preceding claims,

   - the state variable ($\omega_{Nac.y}$) representing a tilt speed ($\omega_{Nac.tilt,y}$) of the nacelle of the wind power installation.

4. The method as claimed at least in any one of the preceding claims,

   - the state variable ($\omega_{Nac.y}$) being determined at least by use of an approximation, which in particular takes into consideration a rotation of a measurement axis with respect to the axis of rotation and/or a horizontal axis of the wind power installation, for example by means of

$$\begin{pmatrix} \omega_{Nac,tilt,x} \\ \omega_{Nac,tilt,y} \\ \omega_{Nac,tilt,z} \end{pmatrix} = \begin{pmatrix} 1 & 0 & 0 \\ 0 & \cos(-\gamma) & -\sin(-\gamma) \\ 0 & \sin(-\gamma) & \cos(-\gamma) \end{pmatrix} \begin{pmatrix} \omega_{Gyro,x} \\ \omega_{Gyro,y} \\ \omega_{Gyro,z} \end{pmatrix}.$$

5. The method as claimed at least in any one of the preceding claims,

   - the at least one angular velocity ($\omega_{gyro,y}$) being filtered before determination of the state variable, in particular by means of a bandpass filter, preferably in order to obtain a second tower eigenmode.

6. The method as claimed at least in any one of the preceding claims,

   - the controlling of the wind power installation being effected in consideration of, in particular with observation of, the state variable ($\omega_{Nac.y}$).

7. The method as claimed at least in any one of the preceding claims,

   - the state variable ($\omega_{Nac.y}$) for controlling the wind power installation being filtered, for example by means of a low-pass filter.

8. A wind power installation, at least comprising:

   - a sensor, for example a rotation rate sensor and/or a magnetic tape sensor,
   - and a control unit that is configured to execute a method as claimed in at least one of claims 1 to 7.

**Revendications**

1. Procédé de fonctionnement d'une éolienne (100), comprenant les étapes :

- de détection d'au moins une vitesse angulaire ($\omega_{gyro,y}$) de l'éolienne (100) par un capteur de vitesse de rotation dans un moyeu de l'éolienne pour détecter une inclinaison de la nacelle ;
- de détection d'une valeur de référence ($\gamma$) pour l'au moins une vitesse angulaire détectée, dans lequel la valeur de référence est une position de rotor ($\gamma$), à savoir l'angle d'une rotation du rotor autour d'un axe de rotor par rapport à la nacelle ;
- de détermination d'au moins une grandeur d'état ($\omega_{Nac,y}$) de l'éolienne, à savoir un mouvement d'avant en arrière de la nacelle le long de l'axe de rotation principal, à partir de l'au moins une vitesse angulaire et de la valeur de référence ;
- de commande de l'éolienne en fonction de la grandeur d'état, en particulier de sorte que la grandeur d'état diminue.

2. Procédé selon la revendication 1, dans lequel

- trois vitesses angulaires ($\omega_{gyro,x}$ ; $\omega_{gyro,y}$ ; $\omega_{gyro,z}$), en particulier absolues, sont détectées dans respectivement une direction (x,y,z), dans lequel une direction (x) s'étend le long d'un axe de rotation d'un rotor de l'éolienne (100) et les autres directions (y, z) sont respectivement perpendiculaires à celle-ci et mutuellement perpendiculaires.

3. Procédé selon au moins l'une des revendications précédentes, dans lequel

- la grandeur d'état ($\omega_{Nac,y}$) représente une vitesse d'inclinaison ($\omega_{Nac.tilt,y}$) de la nacelle de l'éolienne.

4. Procédé selon au moins l'une des revendications précédentes, dans lequel

- la grandeur d'état ($\omega_{Nac,y}$) est déterminée au moins en utilisant une approximation qui prend en particulier en compte une rotation d'un axe de mesure par rapport à l'axe de rotation et/ou à un axe horizontal de l'éolienne, par exemple au moyen de

$$\begin{pmatrix} \omega_{Nac,tilt,x} \\ \omega_{Nac,tilt,y} \\ \omega_{Nac,tilt,z} \end{pmatrix} = \begin{pmatrix} 1 & 0 & 0 \\ 0 & \cos(-\gamma) & -\sin(-\gamma) \\ 0 & \sin(-\gamma) & \cos(-\gamma) \end{pmatrix} \begin{pmatrix} \omega_{Gyro,x} \\ \omega_{Gyro,y} \\ \omega_{Gyro,z} \end{pmatrix}.$$

5. Procédé selon au moins l'une des revendications précédentes, dans lequel

- l'au moins une vitesse angulaire ($\omega_{gyro,y}$) est filtrée avant la détermination de la grandeur d'état, en particulier au moyen d'un passe-bande, de préférence autour d'un 2ème mode propre à la tour.

6. Procédé selon au moins l'une des revendications précédentes, dans lequel

- la commande de l'éolienne s'effectue en tenant compte en particulier de l'observation de la grandeur d'état ($\omega_{Nac,y}$).

7. Procédé selon au moins l'une des revendications précédentes, dans lequel

- la grandeur d'état ($\omega_{Nac,y}$) est filtrée pour commander l'éolienne, par exemple à l'aide d'un filtre passe-bas.

8. Éolienne, comprenant au moins :

- un capteur, par exemple un capteur de vitesse de rotation et/ou un capteur à bande magnétique,
- et une unité de commande qui est configurée pour mettre en œuvre un procédé selon au moins l'une des revendications 1 à 7.

Fig. 1A

Fig. 1B

Fig. 2

Fig. 3A

Fig. 3B

400

410    $\omega_{GYRO, x}, \omega_{GYRO, y}, \omega_{GYRO,z}$       $\gamma$

430

420    $\approx$

450    X

460    $\approx$

480    F

Fig. 4A

400

$\omega_{GYRO, x}$       $\omega_{REF}$

$\approx$       $\approx$

450    $-$

460    $F(\theta)$

480    F

Fig. 4B

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20210095640 A1

- US 20150204208 A1